(19) Europäisches Patentamt
European Patent Office
Office européen des brevets

(11) **EP 4 640 629 A1**

(12) **EUROPEAN PATENT APPLICATION**

(43) Date of publication:
**29.10.2025 Bulletin 2025/44**

(21) Application number: 24172026.7

(22) Date of filing: **23.04.2024**

(51) International Patent Classification (IPC):
*C01B 33/146* (2006.01)    *C01B 33/149* (2006.01)

(52) Cooperative Patent Classification (CPC):
**C01B 33/146; C01B 33/149;** C01P 2004/64

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nouryon Chemicals International B.V.
1101 BZ Amsterdam (NL)**

(72) Inventor: **TÖRNCRONA, Anders
1101 BZ Amsterdam (NL)**

(74) Representative: **Ingrassia, Fisher & Lorenz UK
Ltd.
Cambridge House
Henry Street
Bath BA1 1BT (GB)**

(54) **DERIVATIZATION PROCESS FOR PRODUCING CATIONIC COLLOIDAL SILICA**

(57) Provided is a process for producing cationic colloidal silica which is surface-modified by cationic organosilanes, comprising the following steps: (i) reacting a colloidal silica at alkaline conditions with a cationic organosilane at above 20°C to produce a negatively charged surface-modified colloidal silica; and (ii) reversing the surface charge of the negatively charged surface-modified colloidal silica by contacting the negatively charged surface-modified colloidal silica with an ion exchange resin to obtain a positively charged surface-modified colloidal silica.

Figure 1

## Description

### TECHNICAL FIELD

The present invention relates to a process for producing cationic colloidal silica which is surface-modified by cationic organosilanes.

### Technical Background

Silica sols contain small, discrete particles of silica suspended in a liquid phase, which is typically aqueous. The pH of the sols is usually alkaline, and the silica particles tend to have a negative charge, counterbalanced by cations in the sol, typically alkali metal cations. The negative charge provides a repulsive force between particles that helps to avoid particle agglomeration and gelation. Due to this advantage of negatively charged silica sol, many different silica modification methods have been proposed to further enhance and modify the negative charge on the silica sol, as for instance described in US 10,647,887 B2 and US 2021/0380419 A1.

It is also possible to modify the silica particles such that their surface negative charge is reduced or even reversed to a positive charge. Such "charge-reversed" sols can be stable at lower pH, which is useful in applications where higher, alkaline pH values are undesirable.

One way of making charge-reversed silica sols is to coat or modify the surface of the silica particles with cationic trivalent or tetravalent metal species. An example is described in US3007878, which discloses a method of producing colloidal silica particles coated with a polyvalent metal-oxygen by adding colloidal silica to a solution of basic salt solution of metals having a valency of 3 to 4 to the silica sol. The result is silica sol particles with surfaces modified with metal oxide, metal hydroxide and/or hydrated metal oxide. US3139406 also discloses a method for producing coated silica colloidal particles, in which a colloidal silica is added to a trivalent acidic metal salt, where the anions associated with the salt (e.g. chloride ions) are subsequently removed using a strong base anion-exchange resin.

However, metal modification of the surface of silica sols is not always desirable. Hence, there have also been attempts to prepare cationic charged silica sols which are modified with alternatives, non-metallic cationic groups. such as for instance nitrogen- or sulfur-containing compounds, such as polyethyleneimine-dervied silanes or aminoalkyl silanes. The nitrogen-containing groups of these silanes are protonated at a pH below their respective pKb-value and hence provide a cationic charge on the silica surface. They are described for instance in US 2022/0112401 A1 or US 9,803,108 B1.

However, it has also been found that derivatization of silanes with cationic groups suffers from several drawbacks, including a tendency of the cationic colloidal silica to agglomerate during the production process and/or unsatisfactory surface coverage of cationic groups on the silica surface. Also, known preparation processes are complicated as they require various process steps sometimes even requiring intermediate cleaning steps which is tedious and costly. Even further, the derivatization processes presently used and using acidic pH so to ensure an overall cationic charge of the colloidal silica suffer from slow reaction kinetics.

Hence, there is a need for improved derivatization processes for producing cationic colloidal silica which preferably overcome at least one, and more preferably all of the above described drawbacks of the known processes.

### Summary of the invention

The present invention provides a process for producing cationic colloidal silica which is surface-modified by cationic organosilanes, comprising the following steps:

(i) reacting a colloidal silica at alkaline conditions with a cationic organosilane at above 20°C to produce a negatively charged surface-modified colloidal silica;
(ii) reversing the surface charge of the negatively charged surface-modified colloidal silica by contacting the negatively charged surface-modified colloidal silica with an ion exchange resin to obtain a positively charged surface-modified colloidal silica.

### Brief Description of Drawings

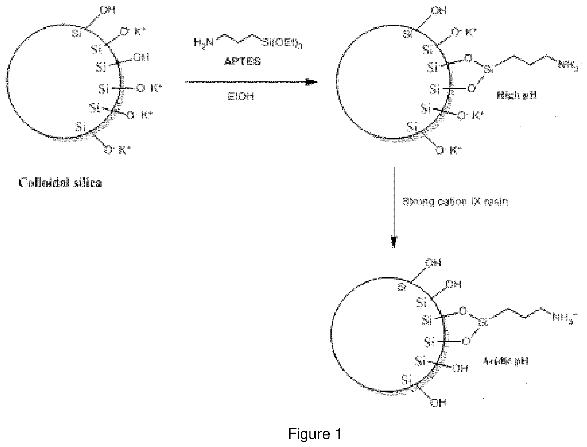

Fig. 1: Figure 1 schematically shows the method of the present invention in the context of the Example of the present application.

EP 4 640 629 A1

**Description**

The present invention provides a process for producing cationic colloidal silica which is surface-modified by cationic organosilanes, comprising the following steps:

(i) reacting a colloidal silica at alkaline conditions with a cationic organosilane at above 20°C to produce a negatively charged surface-modified colloidal silica;
(ii) reversing the surface charge of the negatively charged surface-modified colloidal silica by contacting the negatively charged surface-modified colloidal silica with an ion exchange resin to obtain a positively charged surface-modified colloidal silica.

It has been found that such process surprisingly provides cationic organosilane-modified silica particles which are not agglomerated, and which have a uniform distribution of the positive charges on the surface. Apart from that involves the process of the present invention only a very limited number of simple process steps. Without wishing to be bond by theory, it is assumed that these beneficial effects, and in particular the suppression of agglomeration is achieved by performing the actual surface-modification by the cationic organosilanes in step (i) still under alkaline conditions, thereby ensuring that the overall charge of the silica surface is still negative. Only in the second step is the pH of the silica changed to acidic so to obtain the positively charged surface-modified colloidal silica.

In the first step (i) of the process of the present invention, a colloidal silica is reacted at alkaline conditions with a cationic organosilane at above 20°C to produce a negatively charged surface-modified colloidal silica.

In the process of the present invention, the colloidal silica can be any conventional silica (also referred herein to as "silica sol"). This starting aqueous silica sol is basic, typically having a pH in the range of from 8.0 to 12.0, for example from 9.0 to 11.0. Other components of such sols include the presence of one or more monovalent cations, typically selected from alkali metal cations, and organic cations such as quaternary ammonium cations, for example those of general formula $NR_4^+$ where each R is independently selected from H and $C_{1-6}$ alkyl where the $C_{1-6}$ alkyl is optionally substituted with one or more groups selected from -OH and $-NH_2$. In embodiments, the monovalent cations are selected from alkali metal cations, for example one or more of lithium, sodium and potassium, and also from ammonium ions ($NH_4^+$). Typically, potassium is the sole or predominant alkali metal. The alkali metals are often derived from the starting soluble silicate solutions (e.g. water glass) that can be used to make the colloidal silica using conventional processes.

Examples of suitable aqueous alkali metal silicates or water glass that can be used to make the starting aqueous silica sol include conventional materials, e.g. lithium, sodium and potassium silicates, preferably sodium silicate.

The content of alkali metals in the starting silica sol is typically in the range of from 0.1 to 5.0 wt%, expressed as alkali metal oxide. In embodiments, it is from 0.2 to 3.0 wt%.

The silica concentration in the starting aqueous silica sol is typically in the range of from 1 to 40 wt%, for example from 2 to 35wt% or from 3 to 30wt%.

The surface area of colloidal silica particles in a silica sol is not limited and can be calculated from NaOH titration following the method of Sears (Sears; Anal. Chem., 1956, 28(12), 1981-1983).

The colloidal silica particles in the starting silica sol suitably have an average particle diameter ranging from 2 to 150 nm, preferably from about 3 to about 100 nm. In preferred embodiments, the average particle diameter is in the range of from 10 to 100 nm.

The particle diameters can be calculated from the titrated surface area using a method described in "The Chemistry of Silica", by Iler, K. Ralph, page 465, John Wiley & Sons (1979). Based on the assumption that the silica particles have a density of 2.2 g cm$^{-3}$, and that all particles are of the same size, have a smooth surface area and are spherical, then the particle diameter can be calculated from Equation 1:

$$\text{Particle diameter (nm)} = \frac{2720}{\text{Surface Area (m}^2\text{g}^{-1})} \qquad \text{Equation 1}$$

The density of the starting aqueous silica sol is at least in part dependent on the silica content, and is typically in the range of from 1.01 to 1.20 g cm$^{-3}$.

The viscosity of the starting aqueous silica sol is typically less than 40 cP, for example less than 30 cP, and in particular less than 20 cP. In embodiments, it is less than 10 cP. These viscosities are measured at 20.0°C. Viscosities of silica sols, including those described herein, can be measured using a conventional rotational viscometer. A method that can be used is ASTM D4016-14.

The starting sol is typically an aqueous sol, although it can comprise other components, e.g. water-miscible organic solvents, such as one or more lower alcohols (e.g. one or more $C_1$ to $C_4$ alkyl alcohols). If other components are present, they typically constitute less than 10wt% of the sol, for example less than 5wt%.

In aqueous systems, the colloidal silica particles can be dispersed in the presence of one or more stabilising cations, which are typically selected from $K^+$, $Na^+$, $Li^+$, $NH_4^+$, and organic cations, such as the quaternary ammonium cations of general formula $NR_4^+$ described above.

Examples of sols that can be used as starting aqueous silica sols include silica sols marketed under the name Levasil™ from Nouryon Chemicals B.V.

In the process of the present invention, in step (i) the colloidal silica is reacted at alkaline conditions with a cationic organosilane. Preferably, the reaction is performed at above pH 8, and more preferably above pH 9. In some embodiments, the reaction is performed at a pH below 12, preferably below 11, and more preferably below 10., In some embodiments, the reaction is performed at a pH within the range of 8 to 11, preferably within the range of 8.5 to 10.5, or even more preferably with the range of 9 to 10, such as within the range of from 9 to 9.5.

The pH may be adjusted using common bases, such as potassium hydroxide and sodium hydroxide. However, it has been found that a mixture of potassium hydroxide and potassium nitrate is particularly desirable as such mixture can be better ion-exchanged during step (ii) of the process of the present invention and leads to a more acidic and low viscous final product obtained in step (ii).

Keeping step (i) of the process of the present invention at alkaline conditions ensures that the silanol groups on the silica surface are sufficiently deprotonated so to keep the silica in anionic form and to ensure resistance to agglomeration.

In the process of the present invention, the colloidal silica is reacted with a cationic organosilane at a temperature above 20°C, such as at above 30°C, preferably at above 40°C, and even more preferably at above 50°C. In some embodiments, the colloidal silica is reacted with a cationic organosilane at a temperature between 20 and 100°C, such as between 30 and 100°C, or 40 and 100°C, preferably between 50 and 90°C, and even more preferably between 50 and 80°C.

In the process of the present invention, the colloidal silica is reacted with a cationic organosilane. The cationic organosilane may be based on any silane which comprises amino groups, such as primary, secondary or tertiary amine groups. In some embodiments, the cationic organosilane may be based on an aminoalkylsilane, preferably on an aminoalkylalkoxysilane. In some embodiments, the organosilane is based on an organosilane selected from the group consisting of aminopropyl trialkoxy silanes, such as aminopropyl triethoxy silane (APTES) and aminopropyl trimethoxy silane, aminobutyl trialkoxy silanes, such as aminobutyl triethoxy silane and aminobutyl trimethoxy silane, aminoethyl trialkoxy silanes, such as aminoethyl triethoxy silane and aminoethyl trimethoxy silane, N,N-(diethylaminomethyl) triethoxysilane (DEAMS), N,N-(diethylaminomethyl)trimethoxysilane N-(2-aminoethyl)-3-aminopropyltrimethoxysilane (AEAPS), N-(2-aminoethyl)-3-aminopropyltriethoxysilane, N-aminoethylaminoethylaminopropyl trimethoxysilane, N-aminoethylaminoethylaminopropyl triethoxysilane, and combinations thereof. In a particular preferred embodiment, the cationic organosilane may be based on aminopropyl trialkoxy silane, in particular aminopropyl triethoxy silane (APTES).

In the process of the present invention, wherein step (i) is performed at alkaline conditions, the alkaline conditions are adjusted such that the organosilane is present in cationic form. Each specific organosilane has a particular pH below which it is protonated. The skilled person may obtain this particular pH from literature and hence can adjust the alkaline conditions according to a particular selected organosilane. For instance, the primary amine group of APTES is protonated at below pH 10.5, i.e. the aminopropyl group of APTES is cationic below pH 10.5. The particular selection of a suitable alkaline pH for step (i) of the process of the present invention is hence also dependent on the particular aminosilane used for silane derivatization.

The organosilane may be added to the colloidal silica as such or diluted in a suitable solvent. In other words, in some embodiments, before being reacted with the colloidal silica the cationic organosilane may be diluted in a solvent. The solvent may be water or a hydrophilic organic compound, and preferably is a hydrophilic organic compound. It has been found that such dilution, in particular in a hydrophilic organic compound, significantly suppresses selfcondensation of the organosilane and/or reactivity of the organosilane. The solvent also ensures sufficient hydrolyzation of the organosilane. In case the organosilane contains alkoxy groups, such as for instance ethoxy groups, hydrolyzation of these alkoxy groups is necessary to obtain reactive silanol groups which can then react by condensation reaction with silanol groups on the silica surface so to form a bond between the silica and the organosilane.

In some embodiments, the hydrophilic organic compound may be selected from alcohols, ethers, ester, nitriles, such as acetonitrile, or combination thereof. Preferably, the hydrophilic organic compound is an alcohol. More preferably, the hydrophilic organic compound is selected from methanol, ethanol, propanol, butanol, pentanol, hexanol, heptanol, octanol, decanol, and combination thereof. Particularly preferred is that the alcohol is ethanol.

The amount of the organosilane added to the silica is not particularly restricted. However, in order to keep the surface-modified colloidal silica obtained in step (i) of the process of the present invention still negatively charged, the surface-modification with the cationic organosilane must lead to an overall net positively charged silica. In other words, on the silica there must remain after step (i) more negatively charged deprotonated silanol groups (i.e. $SiO^-$ groups) than positively charged organic groups derived from the organosilane. For instance, it is known from the literature that the total number of silanol groups per $nm^2$ on silica is about 4.9 which corresponds to 8 pmol $SiOH/m^2$. At pH 9.0, a significant share of the silanol groups is ionized, i.e. deprotonated. It has been estimated that at such pH 9 the silica has a negative surface charge of 1.26 groups per $nm^2$, which corresponds to about 2.1 pmol $SiO^-/m^2$ (see Sears, G.W., Anal. Chem., 28, (1956, 1981-1983). At a somewhat higher pH, about pH 9.3, it is estimated that the surface charge is even higher, about 2.9 $\mu$mol $SiO^-/m^2$ (see Iler, R.K., The Chemistry of Silica, (1979), p. 356). Based on this, the skilled person can determine suitable maximum amounts of organosilane to be added to the colloidal silica for surface modification taking into account the actual pH used.

In some embodiments, the amount of cationic organosilane that is added in step (i) to react with the colloidal silica is selected such that it is at most 40%, such as at most 30%, preferably at most 20%, more preferably at most 10%, and even more preferably at most 5% of the amount of free $SiO^-$ groups on the colloidal silica.

In a second step (ii) of the process of the present invention, the surface charge of the negatively charged surface-modified colloidal silica obtained in step (i) of the process of the preset invention is reversed by contacting the negatively charged surface-modified colloidal silica with an ion exchange resin to obtain a positively charged surface-modified colloidal silica.

In principle, any commercially available ion exchange resin may be used. Preferably, the ion exchange resin is a strongly acid cationic (SAC) resin, such as a sulfonic acid type resin. Such resins are commercially available, for instance under the tradename Lewatit from Lanxess (Germany) or Amberlite from DuPont (USA). The ion exchange resin is provided in $H^+$ form so that it can exchange metal ions for $H^+$.

The contacting of the negatively charged surface-modified colloidal silica with an ion exchange resin usually takes place in a column, wherein the negatively charged surface-modified colloidal silica is loaded on the top, then passed through the column by elution by means of a suitable solvent thereby contacting the ion exchange resin, and the cation-exchanged silica is removed at the bottom. During the contacting, potassium ions on the surface of the negatively charged surface-modified colloidal silica obtained from step (i) of the process of the present invention which associate to deprotonated $SiO^-$ groups are replaced by $H^+$. This forms neutral silanol groups. As a result, all (or at least the majority) of the deprotonated $SiO^-$ groups are replaced by $H^+$ leading to a positively charged surface-modified colloidal silica, the surface charge of which is now governed by the surface derivatization achieved by the cationic organosilane.

The positively charged surface-modified colloidal silica obtained in step (ii) of the process of the present invention has usually an acidic pH, preferably a pH of below 8, more preferably of below 5, an even more preferably a pH below 4, such as a pH within the range of 2 to 4 or even 3 to 4.

**Examples**

The following non-limiting example illustrates how to practice the invention.

Preparation of solution for controlled alkalization:

80 g potassium hydroxide (KOH) was added into 920 g of deionized water and stirred to dissolve the KOH. The resulting KOH(aq) solution contained 7 wt% KOH(aq). 1 g potassium nitrate ($KNO_3$) were added to 74 g of the 7 wt% KOH(aq)-solution and stirred to dissolve the KNOs. The resulting $KOH/KNO_3$(aq) solution, in total 75 g, is ready to be used.

Controlled alkalization of a deionized colloidal silica:

5000 g Levasil EXP351 (colloidal silica, obtainable from Nouryon Chemicals B.V.) was added in a multi-neck 6 L round flask equipped with baffles to ensure good mixing. The round flask was placed in an electrical heating jacket and an electrical motor with adjustable stirring speed was connected. Stirring was started at about 300 rpm. 75 g of the $KOH/KNO_3$ (aq)-solution were dosed to the flask at a dosing rate of 7-8 mL/min. The product was stirred for 1 h after all KOH/KNOs-solution has been added. The pH of the resulting mixture was 9.2.

Preparation of cationic organosilane (aminopropyl triethoxy silane (APTES)) solution in ethanol

9 g of aminopropyl triethoxy silane (APTES) were added to 81 g of 99.5% ethanol (spectroscopic grade) in a flask. The APTES/Ethanol solution was stirred to mix it well.

Heating and addition of APTES/Ethanol-solution:

The alkalized Levasil EXP351 dispersion was stirred at 300 rpm and heated at 60 °C. When the temperature of the alkalized Levasil EXP351 had reached 60 °C, the APTES/Ethanol - solution was dosed at a rate of 1.24 mL/min until a total volume of 31.2 mL APTES/EtOH-solution has been added. The obtained mixture was stirred at 60 °C for 3 h and subsequently allowed to cool to room temperature under continued stirring. It could be confirmed that the reaction of the APTES with the silica surface was relatively quick and complete.

Cation-exchange of APTES-derivatized product:

A 50 mm in diameter column is filled with a strong cation exchange resin (SAC, strongly acidic cation exchange resin; sulfonic acid type; IEX-capacity 1.8-2.0 eq/L) in the H$^+$-form. The APTES-derivatized product was then passed through the column. The resulting pH of the cation-exchanged product obtained from the column had a pH of 3.4 and a conductivity of around 350 $\mu$S/cm. Moreover, the obtained positively charged surface-modified colloidal silica did not show any agglomeration but remained in colloidal form. It could also be confirmed that the positively charged groups were evenly distributed over the surface of the silica.

The method of the present invention is schematically shown for the Example described herein in Figure 1. At the beginning, at high pH, the colloidal silica (the circle comprising Si atoms) is partially negatively charged. This provides for electrostatic stabilization as well as high reactivity towards organosilanes, such as APTES. During step (i) of the process of the present invention, colloidal silica is reacted with the organosilane APTES in ethanol so to obtain colloidal silica which carries on some of its silanol groups the (hydrolyzed) organosilane. The obtained colloidal silica is amphoteric as it contains positively charged groups derived from the organosilane but in total still has a net anionic surface charge. The negatively charged surface-modified silica is then contacted with a strong cation exchange resin (cation IX resin) which transforms the anionic deprotonated silanol groups into protonated silanol groups. The obtained colloidal silica at acidic pH is positively charged and carries a net positive surface charge.

## Claims

1. A process for producing cationic colloidal silica which is surface-modified by cationic organosilanes, comprising the following steps:

   (i) reacting a colloidal silica at alkaline conditions with a cationic organosilane at above 20°C to produce a negatively charged surface-modified colloidal silica;
   (ii) reversing the surface charge of the negatively charged surface-modified colloidal silica by contacting the negatively charged surface-modified colloidal silica with an ion exchange resin to obtain a positively charged surface-modified colloidal silica.

2. The process of claim 1, wherein the ion exchange resin is a strongly acid cationic resin (SAC) resin, such as a sulfonic acid type resin.

3. The process of claim 1 or 2, wherein in step (i) the reaction of the colloidal silica with the cationic organosilane is performed at above pH 8.

4. The process of any of claims 1-3, wherein in step (i) the reaction of the colloidal silica with the cationic organosilane is performed at a pH of 8.5 to 10.5, preferably at a pH of 9 to 9.5.

5. The process of any of claims 1-4, wherein the cationic organosilane is an aminoalkylsilane, and preferably is an aminoalkylalkoxysilane.

6. The process of any of claims 1-5, wherein the cationic organosilane is aminopropyl triethoxy silane.

7. The process of any of claims 1-6, wherein before being reacted with the colloidal silica the cationic organosilane is diluted in a hydrophilic organic compound, such as alcohols, ethers, ester, or nitriles.

8. The process of any of claim 7, wherein the hydrophilic organic compound is an alcohol.

9. The process of claim 7 or 8, wherein the hydrophilic organic compound is ethanol.

10. The process of any of claims 1-9, wherein step (i) is performed between 40 and 100°C, preferably between 50°C and 80°C.

11. The process of any of claims 1-10, wherein the amount of cationic organosilane that is added in step (i) to react with the colloidal silica is selected such that it is at most 20%, preferably at most 10% of the amount of free SiO$^-$ groups on the colloidal silica.

12. The process of any of claims 1-11, wherein the positively charged surface-modified colloidal silica obtained in step (ii) has a pH of below 5, preferably a pH within the range of 3 to 4.

Figure 1

## EUROPEAN SEARCH REPORT

Application Number

EP 24 17 2026

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/294168 A1 (SUN QI [JP] ET AL) 25 November 2010 (2010-11-25) * paragraphs [0024], [0025], [0058] - [0061] * * the whole document * | 1-12 | INV. C01B33/146 C01B33/149 |
| Y | DATABASE WPI Week 2022 Thomson Scientific, London, GB; AN 2022-D3018T XP002812627, -& WO 2022/226471 A1 (VERSUM MATERIALS US LLC) 27 October 2022 (2022-10-27) * abstract * * citations refer to the machine translation into English; paragraphs [0121] - [0128] * * the whole document * | 1-12 | |
| Y | US 2008/287038 A1 (MIYABE SHINSUKE [JP] ET AL) 20 November 2008 (2008-11-20) * paragraphs [0051] - [0054]; example 1 * * the whole document * | 1-12 | **TECHNICAL FIELDS SEARCHED (IPC)** C01B |
| Y | JP 2006 321978 A (LION CORP) 30 November 2006 (2006-11-30) * examples 1, 2 * * the whole document * | 1-12 | |

The present search report has been drawn up for all claims

| Place of search | Date of completion of the search | Examiner |
|---|---|---|
| The Hague | 27 November 2024 | Straub, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 2026

This annex lists the patent family members relating to the patent documents cited in  the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | | Publication date |
|---|---|---|---|---|
| US 2010294168 A1 | 25-11-2010 | AR | 060060 A1 | 21-05-2008 |
| | | CA | 2646753 A1 | 04-10-2007 |
| | | CL | 2007000734 A1 | 02-05-2008 |
| | | CN | 101460575 A | 17-06-2009 |
| | | EP | 1996654 A2 | 03-12-2008 |
| | | HK | 1133437 A1 | 26-03-2010 |
| | | JP | 5395656 B2 | 22-01-2014 |
| | | JP | 2009530146 A | 27-08-2009 |
| | | KR | 20080110847 A | 19-12-2008 |
| | | TW | 200745294 A | 16-12-2007 |
| | | US | 2010294168 A1 | 25-11-2010 |
| | | WO | 2007111943 A2 | 04-10-2007 |
| WO 2022226471 A1 | 27-10-2022 | EP | 4326678 A1 | 28-02-2024 |
| | | JP | 2024517121 A | 19-04-2024 |
| | | KR | 20230170787 A | 19-12-2023 |
| | | TW | 202241809 A | 01-11-2022 |
| | | US | 2024209234 A1 | 27-06-2024 |
| | | WO | 2022226471 A1 | 27-10-2022 |
| US 2008287038 A1 | 20-11-2008 | JP | 2008288398 A | 27-11-2008 |
| | | US | 2008287038 A1 | 20-11-2008 |
| JP 2006321978 A | 30-11-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10647887 B2
- US 20210380419 A1
- US 3007878 A
- US 3139406 A
- US 20220112401 A1
- US 9803108 B1

**Non-patent literature cited in the description**

- **SEARS**. *Anal. Chem.*, 1956, vol. 28 (12), 1981-1983
- **ILER, K. RALPH**. The Chemistry of Silica. John Wiley & Sons, 1979, 465
- **SEARS, G.W.** *Anal. Chem.*, 1956, vol. 28, 1981-1983
- **ILER, R.K.** *The Chemistry of Silica*, 1979, 356